# EUROPEAN PATENT SPECIFICATION

(11) **EP 3 091 269 B1**
(45) Date of publication and mention of the grant of the patent: **27.09.2017**
(21) Application number: 15166293.9
(22) Date of filing: 04.05.2015
(51) Int. Cl.: F16M 11/04, F16B 21/08, F16M 11/10, F16M 11/16, F16M 13/00, F16M 13/02

(54) **FIXING DEVICE**
FIXIERVORRICHTUNG
DISPOSITIF DE FIXATION

(43) Date of publication of application: 09.11.2016
(73) Proprietor: Chang, Michael Chau-Lun, Zhongshan Dist., 104 Taipei City (TW)
(72) Inventor: Chang, Michael Chau-Lun, Zhongshan Dist., 104 Taipei City (TW)
(74) Representative: Lang, Christian

(56) References cited:
- EP-A2- 2 270 383
- US-A- 3 921 261
- US-A- 4 786 025

## Description

### BACKGROUND OF THE INVENTION

### 1. FIELD OF THE INVENTION

The present invention relates to a fixing device, and particularly to a fixing device that is separable and connectable in a quick and easy manner, where one end of the fixing device is to hold an external object and another end is to be secured onto another external object.

### 2. RELATED ART

With the vigorous development and widely used of portable electronic devices, users can carry and use them all the time. Such portable electronic devices are known as mobile phones, tablet PC, or digital cameras. However, for certain scenarios or places, users may not be able to use or free their hands to hold a portable device. In such situations, the portable device is to be held by a securing apparatus.

A traditional securing apparatus for securing a portable device is also portable, and has two ends thereof. One end of the securing apparatus is a holding end for holding a portable device, and the other end is a securing end for being secured to an external article or heldby hands. The securing end can secure the securing apparatus to, for example, a bar or edges of a desk. Ways of the holding end to hold a portable device are generally categorized into three types according to the structural differences. The first type is to utilize jaws with a pivotal structure to hold a portable device; the second type is to utilize claws being retractable to fix a portable device; the third type is to provide a clamping backing having a size configured to hold a portable device. Though the above three types can hold a portable device, the first or the second type is consisted of complex components and is not benefit for lowering the manufacturing cost, as well as replacement of components. Furthermore, the manner to manipulate the first and second types of securing apparatus is cumbersome. As to the third type, it only allows portable devices to be held onto the clamping backing with compatible size, and is therefore very inconvenient for various shapes of portable

US 4 786 025 A1 discloses a fixing device according to the preamble of claim 1.

### SUMMARY OF THE INVENTION

Accordingly, an object of the present invention is to provide a fixing device that is separable and holds an external object in a manner of adhesive for hands-free convenience.

Another object of the present invention is to provide a fixing device that is capable of being engaged or disengaged quickly and easily, and is rotatable in use.

The fixing device of the present invention comprises a base body comprising a holding wall and a connecting wall spaced apart from the holding wall. The connecting wall forms a connecting hole thereon, the connecting hole comprising a plurality of tooth-like grooves radially extending outward from peripheries of the connecting hole, and a surface of the holding wall opposite to the connecting wall being provided with a holding element for holding the base body onto a first external object. A connecting unit comprises a connecting pole and an engaging element, the connecting pole forming a hollow portion therein which penetrates one end of the connecting pole, the engaging element disposed in the hollow portion and comprising at least a first engaging leg and at least a second engaging leg respectively extending out of the hollow portion and spaced apart from the connecting pole. The at least a first engaging leg and a second engaging leg correspondingly pass through the plurality of tooth-like grooves of the connecting hole to be engaged in between the connecting wall and the holding wall, so as to connect the connecting unit and the base body and allow the base body to be rotatable upon the connecting pole. A fixing unit is connected to another end of the connecting pole, and a surface of the fixing unit is provided with a fixing element for securing the fixing unit onto a second external object.

In one aspect of the present invention, the engaging element comprises an upper arm, a lower arm and a coupling arm coupling the upper and lower arms, the upper arm forming the at least a first engaging leg at a free end of the upper arm opposite to the coupling arm, the lower arm forming the at least a second engaging leg at a free end of the lower arm opposite to the coupling arm, and the upper and lower arms being spaced apart from each other with respect to a vertical middle portion of the coupling arm.

In another aspect of the present invention, the first engaging leg bends perpendicularly and extends outward from the free end of the upper arm, the lower arm includes two the second engaging legs which respectively bend perpendicularly and extend outward from the free end of the lower arm, the plurality of tooth-like grooves include a first groove and two second grooves, and wherein when the engaging element is to engage with the connecting hole, the first engaging leg and the second engaging legs respectively pass though the corresponding first and second grooves, with the first engaging leg being propped against the first groove to push the upper arm towards the lower arm or the second engaging legs being propped against the second grooves to push the lower arm towards the upper arm, so that the first and second engaging legs are capable of passing through the connecting hole to abut against the first and second grooves.

In another aspect of the present invention, a reinforcing element is formedbetween the upper and lower arms, the reinforcing element comprising two opposite ends respectively connected to the at least a first engaging leg and the at least a second engaging leg, and the reinforcing element comprising at least a bending portion.

In another aspect of the present invention, a positioning frame including a positioning slot formed at a side of the positioning frame, the holding element of the base body extends laterally and bends downward to form a positioning bar for being inserted into the positioning slot to connect the base body to the positioning frame, and a side of the positioning frame opposite to the positioning slot is adhesive to the first external object.

The fixing device of the present invention utilizes the detachable engaging element and the base body to provide a simple structure that enables a quick and easy way of engagement and disengagement. The holding element and the fixing element exemplified by the double-sided adhesive are capable of adhering to the first external object or the second external object for realizing the hands-free advantage and overcoming the drawback of traditional securing apparatus required to be held by users . Furthermore, rotation of the base body enables orientation adjustments of the first external object in use.

### BRIEF DESCRIPTION OF THE DRAWINGS

FIG. 1 is a perspective assembly view of a fixing device of the present invention;
FIG. 2 is an perspective exploded view of FIG. 1;
FIG. 3 is a schematic perspective view of an engaging element of the present invention;
FIG. 4 is a schematic partial assembly view of the fixing device of the present invention;
FIG. 5 is a schematic cross-sectional view showing a process of a connecting unit connected to a base body of the present invention;
FIG. 6 is a schematic cross-sectional view showing the connecting unit positioned in the base body;
FIG. 7 is a schematic view showing a practical implementation of the present invention;
FIG. 8 is a schematic view showing another state of practical use of the present invention;
FIG. 9 is a schematic view showing the connecting unit detached from the base body;
FIG. 10 is a schematic cross-sectional view showing that how the engaging element is ejected from a connecting pole of the present invention;
FIG. 11 is a schematic view showing the engaging element completely ejected from the connecting pole;
FIG. 12 is a schematic perspective view of another embodiment of the present invention;
FIG. 13 is an explodedperspective view of another embodiment of the fixing device of the present invention;
FIG. 14 is a schematic perspective view of a base body of FIG. 13;
FIG. 15 is a partial assembly view of the fixing device of FIG. 13;
FIG. 16 is a schematic process view showing the base body of FIG. 13 hooked onto a positioning frame of the present invention;
FIG. 17 is a schematic view showing a practical implementation of the fixing device of FIG. 13; and
FIG. 18 is a perspective view showing another embodiment of a connectingpole of the present invention.

### DESCRIPTION OF THE PREFERRED EMBODIMENTS

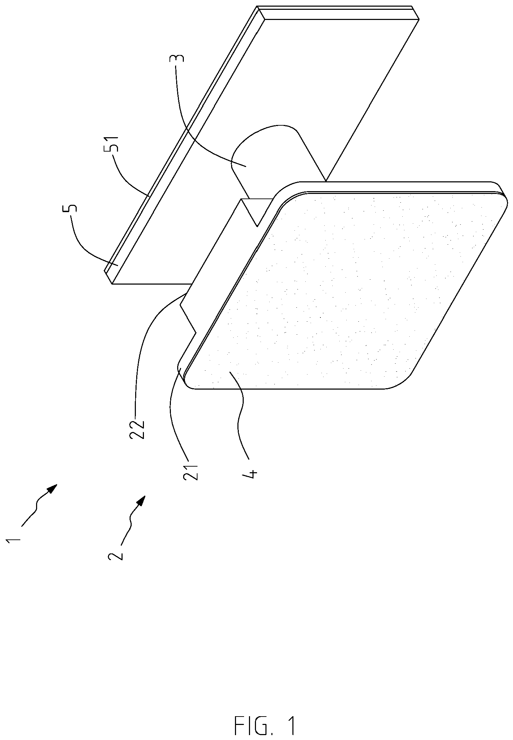

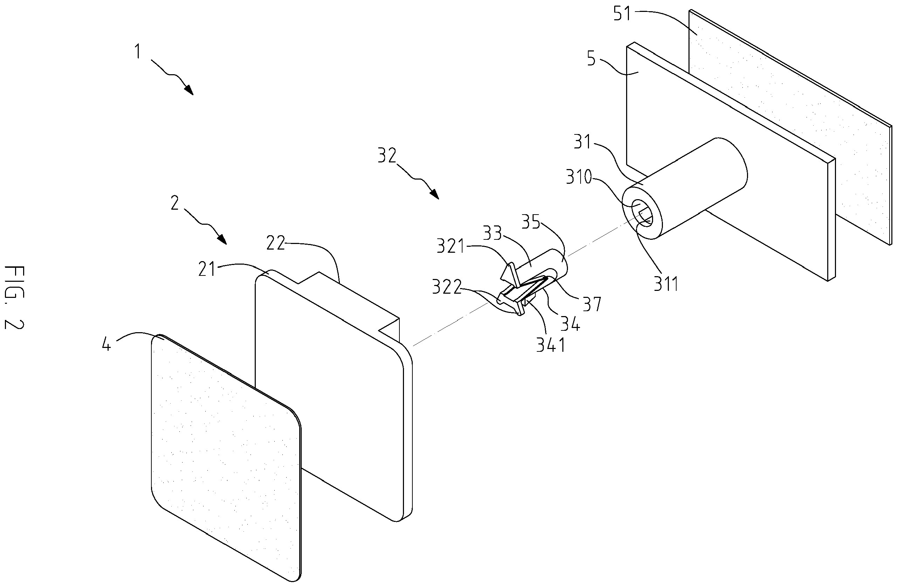

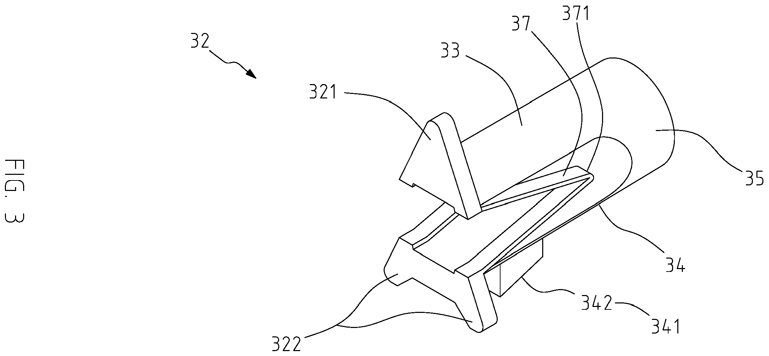

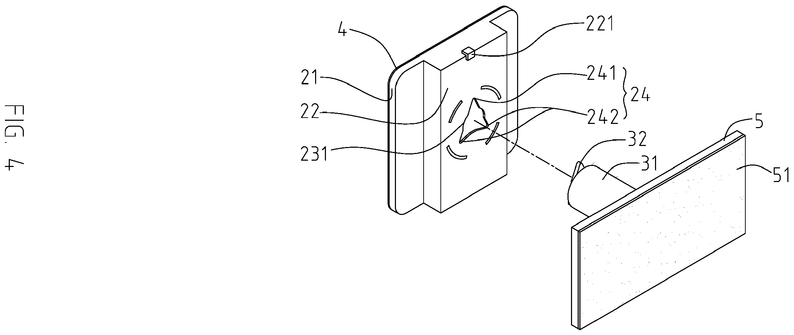

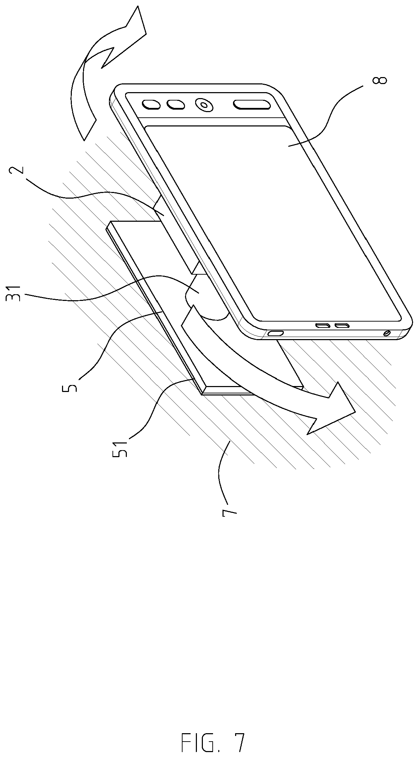

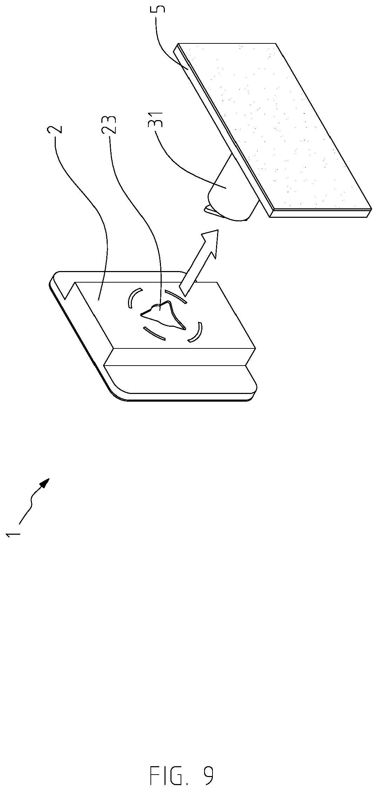

Referring to FIGS. 1 to 11 illustrating a preferable embodiment of a fixing device of the present invention, the fixing device 1 comprises a base body 2, a connecting unit 3, and a fixing unit 5. The base body 2 comprises a holding wall 21 and a connecting wall 22 spaced apart from the holding wall 21, peripheries of the holding wall 21 and the connecting wall 22 are connected to each other. A connecting hole 23 is formed at a middle to lower portion of the connecting wall 22, and a plurality of tooth-like grooves 24 radially extend outward from peripheries of the connecting hole 23. The plurality of tooth-like grooves 24 are spaced apart from each other and include a first groove 241 and two second grooves 242. The first groove 241 is located at an upper portion of the connecting hole 23, and the second grooves 242 are located at a lower portion of the connecting hole 23. Inner contours of the first and second grooves 241 and 242 respectively form guiding edges (not shown) having an inclined shape for facilitating the process of engagement of the connecting unit 3. As shown in FIG. 4, the first groove 241 and the two second grooves 241 cooperatively form the connecting hole 23 having a substantially triangle shape with two lateral arc sides 231. A surface of the holding wall 21 opposite to the connecting wall 22 is provided with a holding element 4. In this embodiment, the holding element 4 is a double-sided adhesive, one side of the holding element 4 adheres to the holding wall 21, the other side of the holding element 4 adheres to a first external object 8, for example, such as a mobile phone or a tablet PC.

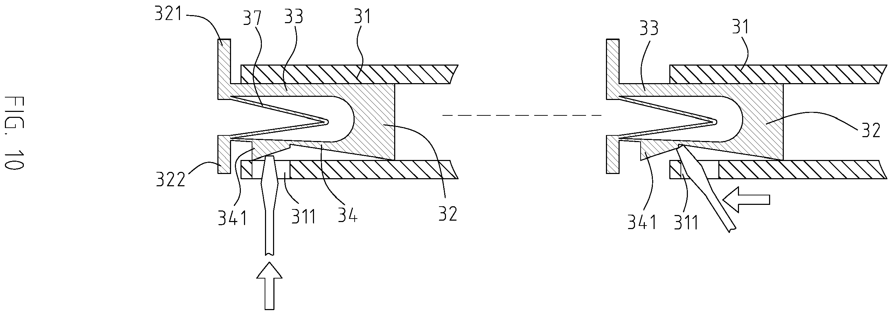

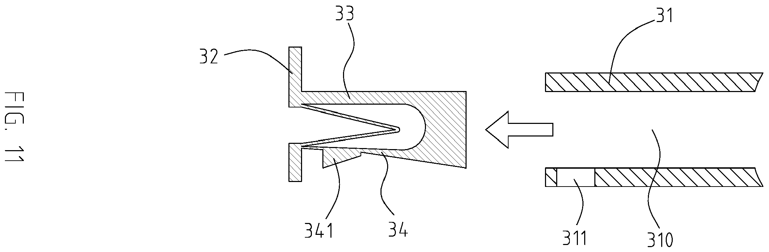

The connecting unit 3 comprises a connecting pole 31 and an engaging element 32. The connecting pole 31 forms a hollow portion 310 therein which penetrates one end of the connecting pole 31. The length of the connecting pole 31 can be varied depending on practical applications. The engaging element 32 is detachably disposed in the hollow portion 310, and comprises an upper arm 33, a lower arm 34 and a coupling arm 35 coupling the upper and lower arms 33 and 34 at an end portion of the engaging element 32. Particularly, the engaging element 32 has a round tubular shape, wherein the upper and lower arms 33 and 34 are evenly spaced apart from each other with respect to a vertical middle portion of the coupling arm 35. The upper arm 33 forms a first engaging leg 321 at a free end of the upper arm 33 opposite to the coupling arm 35. The lower arm 34 forms two second engaging leg 322 at a free end of the lower arm 34 opposite to the coupling arm 35. The first engaging leg 321 and the second engaging legs extend out of the hollow portion 310 and spaced apart from the connecting pole 31 with a space t. Specifically, the first engaging leg 321 bends perpendicularly and extends outward from the free end of the upper arm 33. The two second engaging legs 322 respectively bend perpendicularly and extend outward from the free end of the lower arm 34. The space t is greater than a thickness of the connecting wall 22 but less than a sum of the thickness of the connecting wall 22 and a thickness of the first engaging leg 321, whereby the connecting hole 23 is capable of being embedded into the space t. The connecting pole 31 further comprises a fastening slot 311 at a bottom thereof. The fastening slot 311 penetrates a portion of the connecting pole 31 to communicate with the hollow portion 310. The engaging element 32 is provided with a releasing element 341 which is capable of being fastened to the fastening slot 311. The releasing element 341 is integrally formed on the lower arm 34 and has an inclined surface 342. The releasing element 341 is capable of being depressed from the fastening hole 311 to the hollow portion 310 until the releasing element 341 comes off the fastening slot 311, so as to enable the engaging element 32 to be ejected from the connecting pole 31 (as shown in FIGS. 10 and 11). In this manner, the engaging element 32 is replaceable when it is damaged. Alternatively, the engaging element 32 is integrally formed with the connecting pole 31 in the hollow portion 310 in order to simplify manufacturing and processing procedures.

In particular, a reinforcing element 37 is formed between the upper and lower arms 33 and 34. The reinforcing element 37 comprises two opposite ends respectively connected to the first engaging leg 321 and the second engaging legs 322, and at least a bending portion 371, whereby the reinforcing element 37 has a reversed V shape, but is not limited thereby. The reinforcing element 37 is intended to reinforce strength of cantilever structure of the upper and lower arms 33 and 34 when the upper and lower arms 33 and 34 are being depressed. Moreover, because the upper and lower arm 33 and 34 are connected to and restrained by the reinforcing element 37, the reinforcing element 37 can prevent the upper and lower arms 33 and 34 from causing material fatigue after repeatedly deformation, and further improve flexibility of the upper and lower arms 33 and 34.

With the structure of the above-mentioned embodiment, when the engaging element 32 is to engage with the connecting hole 23, the connecting pole 31 is held obliquely with the first engaging leg 321 placed downward, the first engaging leg 321 firstly passes through the connecting hole 23 and is propped against the first groove 241 to push the upper arm 33 moving downward, then the second engaging legs 322 pass through the corresponding second grooves 242, so that the first and second engaging legs 321 and 322 are capable of passing through the connecting hole 23 to abut against the first and second grooves 241 and 242. As a result, the connecting pole 31 is firmly connected with the base body 2, and the holding element 4 is to adhere to the first external object 8 (i.e. mobile phone), and the fixing unit 5 is to adhere to a second external object 7, for example, such as a wall or a surface of an object. In this manner, users can use the first external object 8 without holding it. Likewise, in removing the connecting pole 31, push the connecting pole 31 upward or downward to depress the upper arm 33 or the lower arm 34, then the connecting pole 31 is obliquely ejected from the base body 2. Alternatively, in cooperation with the guiding edges of the first and second grooves 241 and 242, the engaging element 32 is capable of horizontally inserted in the connecting hole 23, with the first and second engaging legs 321 and 322 being propped against the first and second grooves 241 and 241 so as to force the upper and lower arms 33 and 34 to be depressed towards each other, whereby the engaging element 32 is allowed to pass through the connecting hole 23. In another embodiment, the releasing element 341 is capable of being depressed to push the lower arm 34 tilting upward, whereby the space between the upper and lower arms 33 and 34 is narrowed, and the engaging element 32 is capable of being rejected.

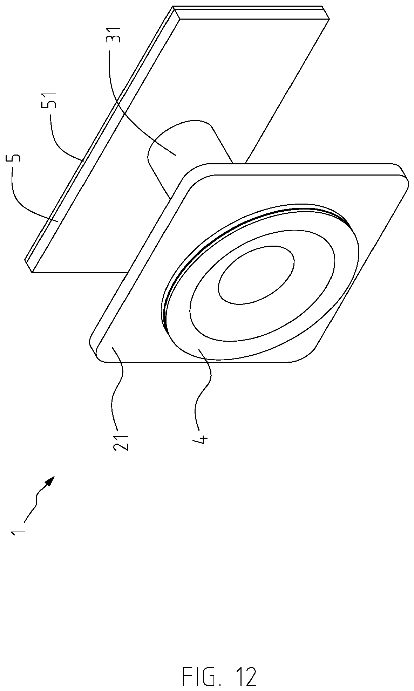

Referring to FIG. 12 showing another embodiment of the present invention, the holding element 4 and the fixing element 51 are respectively exemplified by a hook-and-loop fastener (not shown) or a sucking disk, or either the holding element 4 or the fixing element 51 is the hook-and-loop fastener or the sucking disk. The sucking disk functions as the double-sided adhesive for enabling the base body 2 to hold the first external object 8 with suction force. Furthermore, in the embodiment of double-sided adhesive, the holding wall 21 and the fixing unit 5 both have a board shape which is configured to adhere to the first external object 8 or the second external object 7. Alternatively, the holding wall 21 and the fixing unit 5 can be formed with at least one through hole (not shown) for reducing the amount of material for manufacturing without affecting adhesion of the double-sided adhesive to the holding element 4 and the fixing element 51.

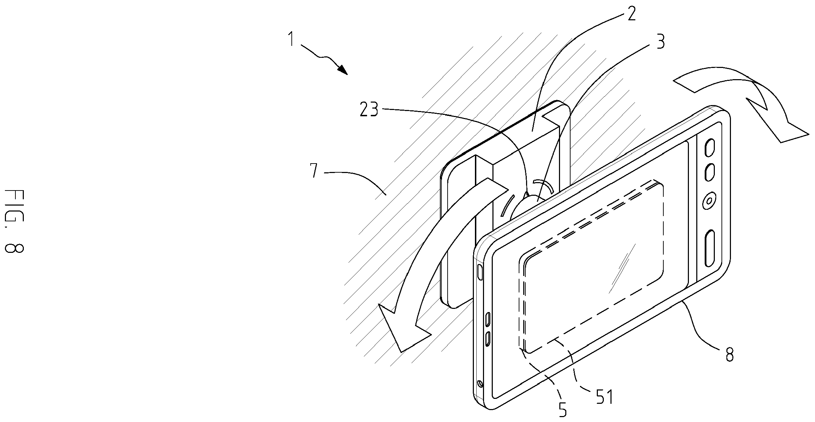

Referring to FIG. 8 showing an alternative application of the present invention, the holding element 4 here is to adhere to the second external object 7 (i.e. a wall surface), while the fixing element 51 is to adhere to the first external object 8 (i.e. mobile phone) . In this manner, the fixing device 1 also provides the hands-free function that users can uses the mobile phone without holding it.

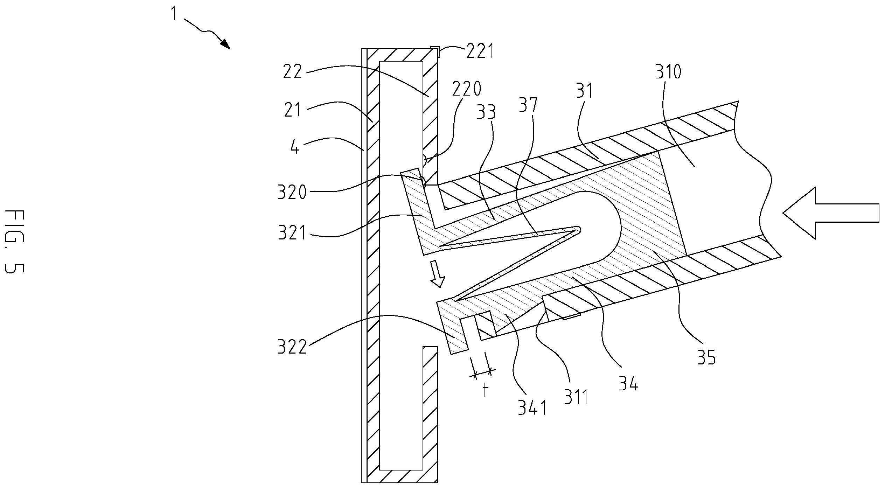

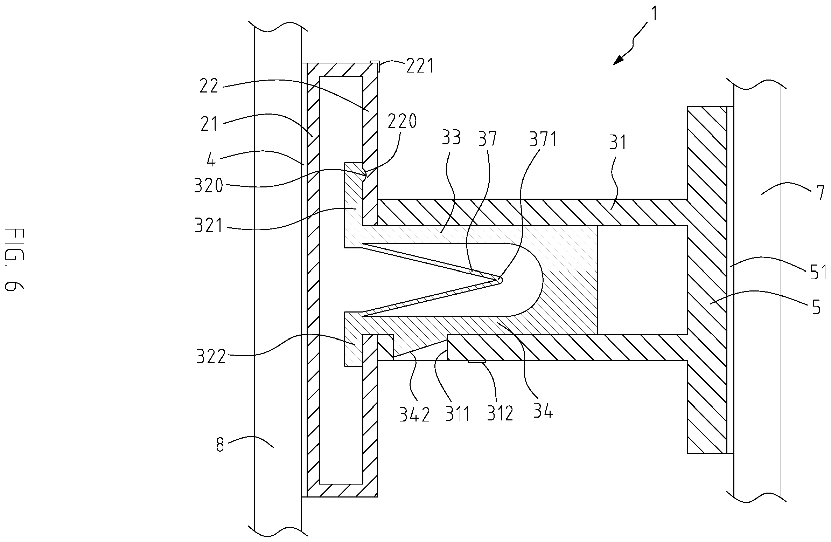

It is particularly noted that the base body 2 is rotatable upon the connecting pole 31, inasmuch as the first and second engaging legs 321 and 322 are spaced with the space t from the connecting pole 31, the base body 2 rotatable upon the connecting pole 31 through the connecting hole 23, or the first and second engaging legs 321 and 322 of the engaging element 32 are rotatable between the holding wall 21 and the connecting wall 22 and thus simultaneously rotate the connecting pole 31. Furthermore, as shown in FIGS. 5 and 6, an interference portion 320 is formed on one side of the first engaging leg 321 or the second engaging leg 322 facing the connecting pole 31; a plurality of embedding portions 220 are formed on one side of the connecting wall 22 facing the holding wall 21. The interference portion 320 is embedded into either one of the embedding portions 220 relative to rotation of the base body 2 or rotation of the connecting pole 31, so as to realize positioning in rotation. Additionally, the engagement of the embedding portions 220 and the interference portion 320 also provides a sound response and a touching response to users. In the course of rotation, the lateral arc sides 231 are recessed outwardly to provide a further zoom for the first and second grooves 241 and 242 when the base body 2 rotates, whereby facilitating rotation of the base body 2 and providing multi-stage of rotation.

The fixing unit 5 is integrally formed with the end of the connecting pole 31 and is rotatable in conjunction with the rotation of the connecting pole 31. In this manner, users can rotate either the base body 2 or the fixing unit 5 to a desired degree or position . Furthermore, the contours of the connecting hole 23 are not limited by the shape depicted in FIG. 4. Other irregular contours of the connecting hole 23 being configured to connect the engaging element 32 is also applicable.

Furthermore, the base body 2 is provided with a first disengaging mark 221 (as shown in FIG. 4) on a surface thereof above the first groove 241. The connecting pole 31 is provided with a second disengaging mark 312 as shown in FIG. 6) on an outer surface thereof. Because the connecting hole 23 is shaped as a triangle, the engaging element 32 is designed to be allowed to disengage from the connecting hole 23 of the base body 2 only when the first disengaging mark 221 is located right above the second disengaging mark 312 and is vertically coplanar with the second disengaging mark 312.

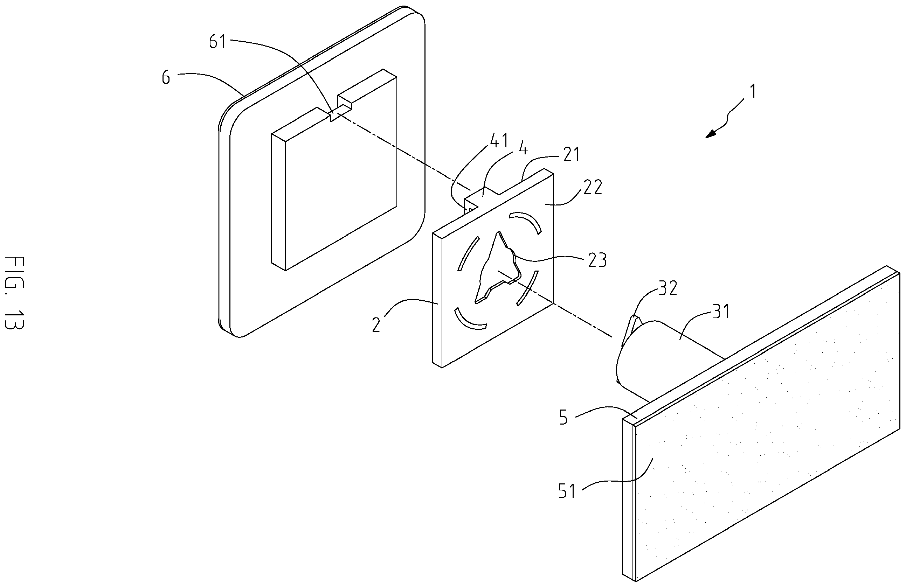

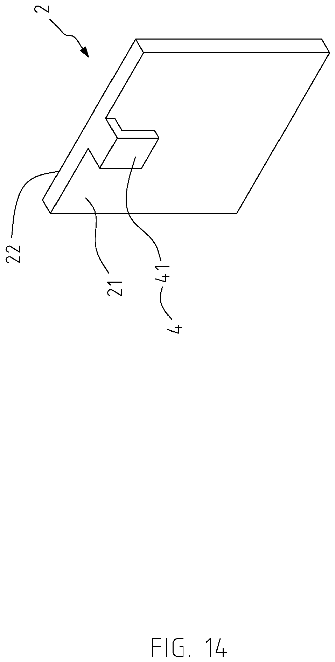

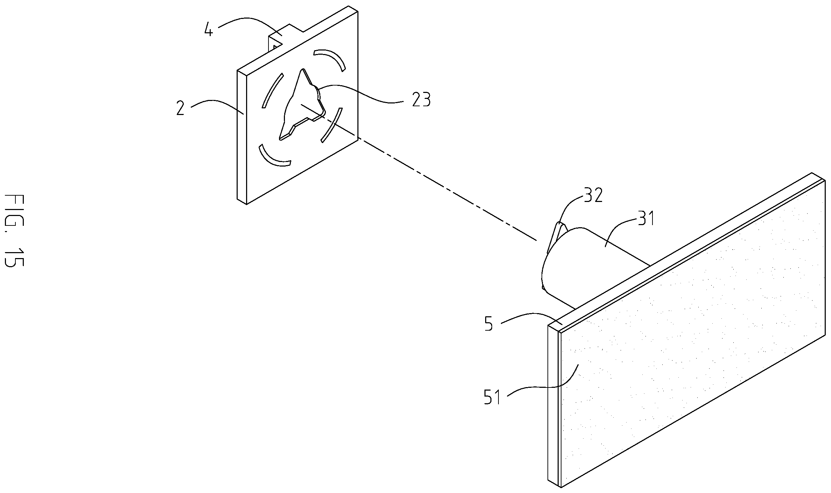

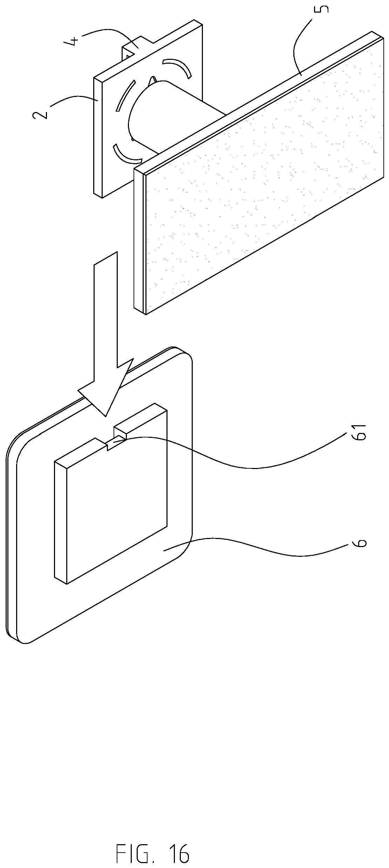

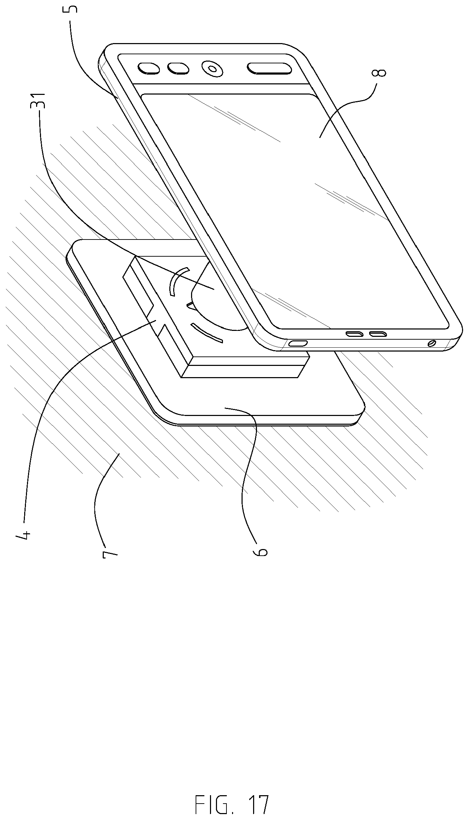

Referring to FIGS. 12 to 17 illustrating a second embodiment of the present invention, in this embodiment, the fixing device 1 is mainly consisted of three pieces, happening into either base body, or between connecting unit and fixing unit. Specifically, the fixing device 1 of this embodiment further comprises a positioning frame 6, which includes a positioning slot 61 formed at a side of the positioning frame 6. The holding element 4 of the base body 2 extends laterally and bends downward to form a positioning bar 41 for being inserted into the positioning slot 61 to connect the base body 2 to the positioning frame 6. A side of the positioning frame 6 opposite to the positioning slot 61 is adhesive to the first external object 8 or the second external object 7. Other structural components not mentioned in this embodiment are same as those described in the foregoing embodiment. In this second embodiment, the base body 2 is hooked onto the positioning frame 6, and therefore provides a quicker and easier way of taking off the entire set of the connecting unit 3 and the base body 2. Alternatively, the positioning frame 6 having the positioning slot 61 is formed on a side of the fixing unit 5 (not shown), while the positioning bar 41 is formed on one end of the connecting unit 3 facing the fixing unit 5 (not shown). As a result, the connecting unit 3 is capable of being hooked onto the fixing unit 5 with the positioning bar 41 inserted into the positioning slot 61, whereby the fixing unit 5 adheres to the second external object 7 (e.g. a wall surface), and the base body 2 adheres to the first external object 8 (e. g. mobile device).

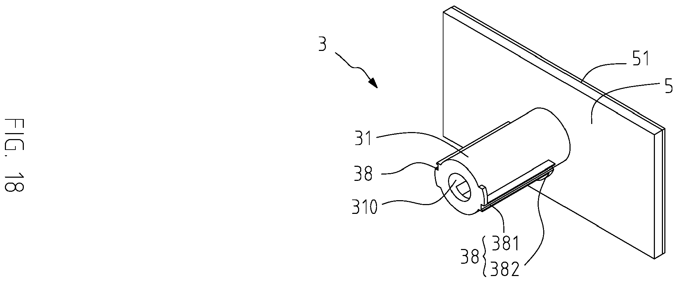

Referring to FIG. 18, two opposite sides of the connecting pole 31 respectively form a track apparatus 38, comprising a channel 381 and a limiting portion 382. The channel 381 is open widely, and the limiting portion 382 bends from one end of the channel 381 and extends along a part of the connecting pole 31. The track apparatus 38 are configured to connect the base body 2 in a manner different to the engagement of the engaging element 32. In this regard, the base body 2 is provided with a mating unit (not shown) configured to couple the track apparatus 38, wherein the channel 381 is connectable to the mating unit and the limiting portion 382 limits the connecting course.

Accordingly, the fixing device 1 of the present invention utilize the detachable engaging element 32 and the base body 2 to provide a simple structure that enables a quick and easy way of engagement and disengagement. The holding element 4 and the fixing element 51 exemplified by the double-sided adhesive are capable of adhering to the first external object 8 or the second external object 7 for realizing the hands-free advantage and overcoming the drawback of traditional securing apparatus required to be held by users. Furthermore, rotation of the base body 2 enables orientation adjustments of the first external object 8 in use.

It is understood that the invention may be embodied in other forms within the scope of the claims. Thus the present examples and embodiments are to be considered in all respects as illustrative, and not restrictive, of the invention defined by the claims.

## Claims

1. A fixing device, comprising:
a base body (2) comprising a holding wall (21) and a connecting wall (22) spaced apart from the holding wall (21), the connecting wall (22) forming a connecting hole (23) thereon, the connecting hole (23) comprising a plurality of tooth-like grooves (24) radially extending outward from peripheries of the connecting hole (23), a surface of the holding wall (21) opposite to the connecting wall (22) being provided with a holding element (4) for holding the base body (2) onto a first external object;
a connecting unit (3) comprising a connecting pole (31) and an engaging element (32), the connecting pole (31) forming a hollow portion (310) therein which penetrates one end of the connecting pole (31), the engaging element (32) disposed in the hollow portion (310) and comprising at least a first engaging leg (321) and at least a second engaging leg (322) respectively extending out of the hollow portion (310) and spaced apart from the connecting pole (31);
and a fixing unit (5) connected to another end of the connecting pole (31), a surface of the fixing unit (5) provided with a fixing element (51) for securing the fixing unit (5) onto a second external object;
**characterised in that**
the at least a first engaging leg (321) and a second engaging leg (322) correspondingly pass through the plurality of tooth-like grooves (24) of the connecting hole (23) to be engaged in between the connecting wall (22) and the holding wall (21), so as to connect the connecting unit (3) and the base body (2) and allow the base body (2) to be rotatable upon the connecting pole (31).

2. The fixing device of claim 1, wherein the engaging element (32) comprises an upper arm (33), a lower arm (34) and a coupling arm (35) coupling the upper and lower arms (33, 34), the upper arm (33) forming the at least a first engaging leg (321) at a free end of the upper arm (33) opposite to the coupling arm (35), the lower arm (34) forming the at least a second engaging leg (322) at a free end of the lower arm (34) opposite to the coupling arm (35), and the upper and lower arms (33, 34) being spaced apart from each other with respect to a vertical middle portion of the coupling arm (35).

3. The fixing device of claim 2, wherein the first engaging leg (321) bends perpendicularly and extends outward from the free end of the upper arm (33), the lower arm (34) includes two second engaging legs (322) which respectively bend perpendicularly and extend outward from the free end of the lower arm (34), the plurality of tooth-like grooves (24) include a first groove (241) and two second grooves (242), and wherein when the engaging element (32) is to engage with the connecting hole (23), the first engaging leg (321) and the second engaging legs (322) respectively pass though the corresponding first and second grooves (241, 242), with the first engaging leg (321) being propped against the first groove (241) to push the upper arm (33) towards the lower arm (34) or the second engaging legs (322) being propped against the second grooves (242) to push the lower arm (34) towards the upper arm (33), so that the first and second engaging legs (321, 322) are capable of passing through the connecting hole (23) to abut against the first and second grooves (241, 242).

4. The fixing device of claim 3, wherein the first and second engaging legs (321, 322) of the engaging element (32) are rotatable between the holding wall (21) and the connecting wall (22), the base body (2) is provided with a first disengaging mark (221) on a surface thereof above the first groove (241), the connecting pole (31) is provided with a second disengaging mark (312) on an outer surface thereof, and when the first disengaging mark (221) is located right above the second disengaging mark (312) and is vertically coplanar with the second disengaging mark (312), the engaging element (32) is allowed to disengage from the connecting hole (23) of the base body (2).

5. The fixing device of claim 2, wherein a reinforcing element (37) is formed between the upper and lower arms (33, 34), the reinforcing element (37) comprising two opposite ends respectively connected to the at least a first engaging leg (321) and the at least a second engaging leg (322), and the reinforcing element (37) comprising at least a bending portion (371).

6. The fixing device of claim 1, wherein the connecting pole (31) further comprises at least a fastening slot (311) penetrating a portion of the connecting pole (31) to communicate with the hollow portion (310), the engaging element (32) provided with a releasing element (341) capable of being fastened to the fastening slot (311), where the releasing element (341) is depressible from the fastening hole (311) to the hollow portion (310), so as to enable the engaging element (32) to disengage from the fastening slot (311) and to be ejected from the connecting pole (31).

7. The fixing device of claim 1, wherein the holding element (4) and the fixing element (51) are respectively a double-sided adhesive, one side of the holding element (4) adheres to the holding wall (21), another side of the holding element (4) adheres to the first external object, one side of the fixing element (51) adheres to the fixing unit (5), and another side of the fixing element (51) adheres to the second external object.

8. The fixing device of claim 1, wherein the holding element (4) and the fixing element (51) are respectively a hook-and-loop fastener or a sucking disk, or either the holding element (4) or the fixing element (51) is the hook-and-loop fastener or the sucking disk.

9. The fixing device of claim 1, wherein an interference portion (320) is formed on one side of the first engaging leg (321) or the second engaging leg (322) facing the connecting pole (31), a plurality of embedding portions (220) are formed on one side of the connecting wall (22) facing the holding wall (21), and the interference portion (320) is embedded into either one of the embedding portions (220) relative to rotation of the base body (2).

10. The fixing device of claim 1, further comprising a positioning frame (6) including a positioning slot (61) formed at a side of the positioning frame (6), the holding element (4) of the base body (2) or the fixing unit (5) extends laterally and bends downward to form a positioning bar (41) for being inserted into the positioning slot (61) to connect the base body (2) or the fixing unit (5) to the positioning frame (6), and a side of the positioning frame (6) opposite to the positioning slot (61) is adhesive to either the first external object or the second external object.

## Patentansprüche

1. Fixiervorrichtung, umfassend:
einen Basiskörper (2), der eine Haltewand (21) und eine von der Haltewand (21) beabstandete Verbindungswand (22) aufweist, wobei die Verbindungswand (22) mit einem Verbindungsloch (23) daran ausgebildet ist, wobei das Verbindungsloch (23) eine Vielzahl von zahnförmigen Aussparungen (24) aufweist, die sich vom Umfang des Verbindungslochs (23) radial nach außen erstrecken, wobei eine der Verbindungswand (22) gegenüberliegende Oberfläche der Haltewand (21) mit einem Halteelement (4) zur Halterung des Basiskörpers (2) an einem ersten externen Gegenstand versehen ist,
eine Verbindungseinheit (3), die einen Verbindungsstab (31) und ein Eingriffselement (32) umfasst, wobei der Verbindungsstab (31) mit einem hohlen Abschnitt (310) darin ausgebildet ist, der durch ein Ende des Verbindungsstabs (31) hindurchgeht, wobei das Eingriffselement (32) in dem hohlen Abschnitt (310) angeoardnet ist und wenigstens einen ersten Eingriffsschenkel (321) und wenigstens einen zweiten Eingriffsschenkel (322) umfasst, welche sich entsprechend aus dem hohlen Abschnitt (310) heraus erstrecken und von dem Verbindungsstab (31) beabstandet sind,
und eine Befestigungseinheit (5), die mit dem anderen Ende des Verbindungsstabs (31) verbunden ist, wobei eine Oberfläche der Befestigungseinheit (5) mit einem Fixierelement (51) zum Anbringen der Befestigungseinheit (5) an einem zweiten externen Gegenstand versehen ist,
**dadurch gekennzeichnet, dass**
der wenigstens eine erste Eingriffsschenkel (321) und ein zweiter Eingriffsschenkel (322) entsprechend durch die Mehrzahl der zahnförmigen Aussparungen (24) des Verbindungslochs (23) hindurchgeführt sind, um zwischen der Verbindungswand (22) und der Haltewand (21) festgeklemmt zu werden, um die Verbindungseinheit (3) und den Basiskörper (2) miteinander zu verbinden und zu ermöglichen, dass der Basiskörper (2) an dem Verbindungsstab (31) drehbar ist.

2. Fixiervorrichtung nach Anspruch 1, bei welcher das Eingriffselement (32) einen oberen Arm (33), einen unteren Arm (34) und einen Koppelarm (235) umfasst, der den oberen und den unteren Arm (33, 34) verbindet, wobei der obere Arm (33) an einem dem Koppelarm (35) gegenüberliegenden freien Ende des oberen Arms (33) mit dem wenigstens einen ersten Eingriffsschenkel (321) ausgebildet ist, wobei der untere Arm (34) an einem dem Koppelarm (35) gegenüberliegenden freien Ende des unteren Arms (34) mit dem wenigstens einen zweiten Eingriffsschenkel (322) ausgebildet ist, und wobei der obere und der untere Arm (33, 34) voneinander in Bezug auf einen vertikalen mittleren Teil des Koppelarms (35) beabstandet sind.

3. Fixiervorrichtung nach Anspruch 2, bei welcher der erste Eingriffsschenkel (321) senkrecht abgewinkelt ist und sich von dem freien Ende des oberen Arms (33) nach außen erstreckt, wobei der untere Arm (34) zwei zweite Eingriffsschenkel (322) aufweist, welche jeweils senkrecht abgewickelt sind und sich von dem freien Ende des unteren Arms (34) nach außen erstrecken, wobei die Mehrzahl der zahnförmigen Aussparungen (24) eine erste Aussparung (241) und zwei zweite Aussparungen (242) beinhaltet, und wobei der erste Eingriffsschenkel (321) und die zweiten Eingriffsschenkel (322), wenn das Eingriffselement (32) mit dem Verbindungsloch (23) in Eingriff gebracht wird, jeweils durch die korrespondierenden ersten und zweiten Aussparungen (241, 242) hindurchgeführt werden, wobei sich der erste Eingriffsschenkel (321) an der ersten Aussparung (241) abstützt, um den oberen Arm (33) in Richtung des unteren Arm (34) zu drücken oder sich die zweiten Eingriffsschenkel (322) an den zweiten Aussparungen (242) abstützen, um den unteren Arm (34) in Richtung des oberen Arms (33) zu drücken, sodass der erste und die zweiten Eingriffsschenkel (321, 322) durch das Verbindungsloch (23) hindurchgeführt werden können, um an den ersten und zweiten Aussparungen (241, 242) anzuliegen.

4. Fixiervorrichtung nach Anspruch 3, bei welcher die ersten und zweiten Eingriffsschenkel (321,322) des Eingriffselements (32) zwischen der Haltewand (21) und der Verbindungswand (22) drehbar sind, wobei der Basiskörper (2) an dessen Oberfläche oberhalb der ersten Aussparung (241) mit einer ersten Freigabemarkierung (221) versehen ist, wobei der Verbindungsstab (31) an dessen Außenfläche mit einer zweiten Freigabemarkierung (312) versehen ist, wobei es, wenn sich die erste Freigabemarkierung (221) genau über der zweiten Freigabemarkierung (312) befindet und vertikal koplanar zur zweiten Freigabemarkierung (312) ist, möglich ist, das Eingriffselement (32) aus dem Verbindungsloch (23) des Basiskörpers (2) zu lösen.

5. Fixiervorrichtung nach Anspruch 2, bei welcher ein Verstärkungselement (37) zwischen dem oberen und dem unteren Arm (33, 34) ausgebildet ist, wobei das Verstärkungselement (37) zwei entgegengesetzte Enden aufweist, die entsprechend mit dem wenigstens einem ersten Eingriffsschenkel (321) und dem wenigstens einem zweiten Eingriffsschenkel (322) verbunden sind, und wobei das Verstärkungselement (37) wenigstens einen Biegungsabschnitt (371) umfasst.

6. Fixiervorrichtung nach Anspruch 1 bei welcher der Verbindungsstab (31) ferner wenigstens einen Befestigungsschlitz (311) umfasst, der einen Abschnitt des Verbindungsstabs (31) durchdringt, um mit dem hohlen Abschnitt (310) zu kommunizieren, wobei das Eingriffselement (32) mit einem Freigabeelement (341) versehen ist, das an dem Befestigungsschlitz (311) befestigt werden kann, wobei das Freigabeelement (341) von dem Befestigungsloch (311) zu dem hohlen Abschnitt (310) gedrückt werden kann, um zu ermöglichen, dass das Eingriffselement (32) von dem Befestigungsschlitz (311) getrennt wird und aus dem Verbindungsstab (31) ausgeworfen wird.

7. Fixiervorrichtung nach Anspruch 1, bei welcher das Halteelement (4) und das Fixierelement (51) jeweils ein doppelseitiges Klebemittel sind, wobei eine Seite des Halteelements (4) an der Halterand (21) anhaftet, wobei die andere Seite des Halteelements (4) an dem ersten externen Gegenstand anhaftet, wobei eine Seite des Fixierelements (51) an der Befestigungseinheit (5) anhaftet, und wobei die andere Seite des Fixierelements (51) an dem zweiten externen Gegenstand anhaftet.

8. Fixiervorrichtung nach Anspruch 1, bei welcher das Halteelement (4) und das Fixierelement (51) jeweils ein Klettverschluss oder ein Saugnapf sind, oder wobei entweder das Halteelement (4) oder das Fixierelement (51) der Klettverschluss oder der Saugnapf ist.

9. Fixiervorrichtung nach Anspruch 1, bei welcher ein Eingriffabschnitt (320) an einer dem Verbindungsstab (31) zugewandten Seite des ersten Eingriffsschenkels (321) oder des zweiten Eingriffsschenkels (322) ausgebildet ist, wobei eine Mehrzahl von Einbettabschnitten (220) an einer der Haltewand (21) zugewandten Seite der Verbindungswand (22) ausgebildet ist, wobei der Eingriffabschnitt (320) abhängig von der Drehung des Basiskörpers (2) in einem der Einbettabschnitte (220) ausgenommen ist.

10. Fixiervorrichtung nach Anspruch 1, welche ferner einen Positionierungsrahmen (6) umfasst, der einen Positionierschlitz (61) aufweist, der an einer Seite des Positionierungsrabmens (6) ausgebildet ist, wobei sich das Halteelement (4) des Basiskörpers (2) oder die Befestigungseinheit (5) lateral erstreckt und nach unten umgebogen ist, um eine Positionierleiste (41) zu bilden, die in den Positionierschlitz (61) eingesteckt werden kann, um den Basiskörper (2) oder die Befestigungseinheit (51) mit dem Positionierungsrahmen (6) zu verbinden, und wobei eine Seite des Positionierungsrahmens (6), die dem Positionierschlitz (61) gegenüberliegt, an entweder dem ersten externen Gegenstand oder dem zweiten externen Gegenstand anhaftet.

## Revendications

1. Dispositif de fixation comprenant :
un corps de base (2) comprenant une paroi de maintien (21) et une paroi de raccordement (22) espacée de la paroi de maintien (21), la paroi de raccordement (22) formant un trou de raccordement (23) dessus, le trou de raccordement (23) comprenant une pluralité de rainures semblables à des dents (24) qui s'étendent à l'extérieur de périphéries du trou de raccordement (23), une surface de la paroi de maintien (21) opposée à la paroi de raccordement (22) étant prévue avec un élément de maintien (4) pour maintenir le corps de base (2) sur un premier objet extérieur,
une unité de raccordement (3) comprenant une pôle de raccordement (31) et un élément d'engrènement (32), le pôle de raccordement (31) formant une portion creuse (310) à l'intérieur qui pénètre une extrémité du pôle de raccordement (31), l'élément d'engrènement (32) étant disposé dans la portion creuse (310) et comprenant au moins une première branche d'engrènement (321) et au moins une seconde branche d'engrènement (322) qui s'étendent respectivement hors de la portion creuse (310) et espacées du pôle de raccordement (31) et une unité de fixation (5) reliée à une autre extrémité du pôle de raccordement (31), une surface de l'unité de fixation (5) étant pourvue d'un élément de fixation (51) pour fixer l'unité de fixation (5) sur un second objet extérieur,
**caractérisé en ce que** la première branche d'engrènement qui existe au moins (321) et une seconde branche d'engrènement (322) traversent de manière correspondante la pluralité de rainures semblables à des dents (24) du trou de raccordement (28) dans lequel il doit y avoir engrènement entre la paroi de raccordement (22) et la paroi de maintien (21) de manière à raccorder l'unité de raccordement (3) et le corps de base (2) et à permettre au corps de base (2) d'être rotatif sur le trou de raccordement (31).

2. Dispositif de fixation selon la revendication 1, l'élément d'engrènement (32) comprenant un bras supérieur (33), un bras inférieur (34) et un bras de couplage (35) accouplant le bras supérieur et le bras inférieur (33, 34), le bras supérieur (33) formant la première branche d'engrènement qui existe au moins (321) à une extrémité libre du bras supérieur (33) opposée au bras de couplage (35), le bras inférieur (34) formant la seconde branche d'engrènement qui existe au moins (322) à une extrémité libre du bras inférieur (34) opposée au bras de couplage (35) et le bras supérieur et le bras inférieur (33, 34) étant espacés l'un de l'autre par rapport à une portion centrale verticale du bras de couplage (35).

3. Dispositif de fixation selon la revendication 2, la première branche d'engrènement (321) étant courbée perpendiculairement et s'étendant à l'extérieur de l'extrémité libre du bras supérieur (33), le bras inférieur (34) comprenant deux secondes branches d'engrènement (322) qui sont courbées respectivement perpendiculairement et qui s'étendent à l'extérieur de l'extrémité libre du bras inférieur (34), la pluralité de rainures semblables à des dents (24) comprenant une première rainure (241) et deux secondes rainures (242) et dans lequel, lorsque l'élément d'engrènement (32) doit s'engrener avec le trou de raccordement (23), la première branche d'engrènement (321) et les secondes branches d'engrènement (322) traversent respectivement la première et la seconde rainure correspondantes (241, 242) avec la première branche d'engrènement (321) qui est posée contre la première rainure (241) pour pousser le bras supérieur (33) vers le bras inférieur (34) ou les secondes branches d'engrènement (322) étant posées contre les secondes rainures (242) pour pousser le bras inférieur (34) vers le bras supérieur (33) si bien que la première et la seconde branche d'engrènement (321, 322) sont capables de traverser le trou de raccordement (23) pour buter contre la première rainure et la seconde rainure (241, 242).

4. Dispositif de fixation selon la revendication 3, la première et la seconde branche d'engrènement (321, 322) de l'élément d'engrènement (32) étant rotatives entre la paroi de maintien (21) et la paroi de raccordement (22), le corps de base (2) étant pourvu d'un premier repère de désengrènement (221) sur une surface de celui-ci au-dessus de la première rainure (241), le pôle de raccordement (31) étant pourvu d'un second repère de désengrènement (312) sur une surface extérieure de celui-ci et lorsque le premier repère de désengrènement (221) est situé à droite au-dessus du second repère de désengrènement (312) et qu'il est verticalement coplanaire avec le second repère de désengrènement (312), l'élément d'engrènement (32) peut se désengrener du trou de raccordement (23) du corps de base (2).

5. Dispositif de fixation selon la revendication 2, un élément de renforcement (37) étant formé entre le bras supérieur et le bras inférieur (33, 34), l'élément de renforcement (37) comprenant deux extrémités opposées reliées respectivement à la première branche d'engrènement qui existe au moins (321) et à la seconde branche d'engrènement qui existe au moins (322) et l'élément de renforcement (37) comprenant au moins une portion de flexion (371).

6. Dispositif de fixation selon la revendication 1, le pôle de raccordement (31) comprenant de plus au moins une fente d'attache (311) qui pénètre une portion du pôle de raccordement (31) pour communiquer avec la portion creuse (310), l'élément d'engrènement (32) pourvu d'un élément de déblocage (341) capable d'être attaché à la fente d'attache (311), l'élément de déblocage (341) étant apte à être enfoncé du trou d'attache (311) à la portion creuse (310) de manière à permettre à l'élément d'engrènement (32) de se désengrener de la fente d'attache (311) et d'être éjecté du pôle de raccordement (31).

7. Dispositif de fixation selon la revendication 1, l'élément de maintien (4) et l'élément de fixation (51) étant respectivement un adhésif double face, une face de l'élément de maintien (4) adhérant à la paroi de maintien (21), une autre face de l'élément de maintien (4) adhérant au premier objet extérieur, une face de l'élément de fixation (51) adhérant à l'unité de fixation (5) et une autre face de l'élément de fixation (51) adhérant au second objet extérieur.

8. Dispositif de fixation selon la revendication 1, l'élément de maintien (4) et l'élément de fixation (51) étant respectivement une fermeture à bouclettes de type Velcro ou un disque ventouse ou soit l'élément de maintien (4), soit l'élément de fixation (51) est la fermeture à bouclettes de type Velcro ou le disque ventouse.

9. Dispositif de fixation selon la revendication 1, une portion d'interférence (320) étant formée sur un côté de la première branche d'engrènement (321) ou de la seconde branche d'engrènement qui existe au moins (322) en face du pôle de raccordement (31), une pluralité de portions d'encastrement (220) étant formée sur un côté de la paroi de raccordement (22) en face de la paroi de maintien (21) et la portion d'interférence (320) étant encastrée dans l'une ou l'autre des portions d'encastrement (220) par rapport à la rotation du corps de base (2).

10. Dispositif de fixation selon la revendication 1 comprenant de plus un cadre de positionnement (6) qui comprend une fente de positionnement (61) formée sur un côté du cadre de positionnement (6), l'élément de maintien (4) du corps de base (2) ou l'unité de fixation (5) s'étendant latéralement et se courbant vers le bas pour former une barre de positionnement (41) devant être insérée dans la fente de positionnement (61) pour relier le corps de base (2) ou l'unité de fixation (5) au cadre de positionnement (6) et un côté du cadre de positionnement (6) opposé à la fente de positionnement (61) étant adhérant soit au premier objet extérieur, soit au second objet extérieur.
